# EUROPÄISCHE PATENTSCHRIFT

(11) **EP 2 960 408 B1**
(45) Veröffentlichungstag und Bekanntmachung des Hinweises auf die Patenterteilung: **07.08.2019**
(21) Anmeldenummer: 15172810.2
(22) Anmeldetag: 19.06.2015
(51) Int. Cl.: E05B 39/00, G06F 3/01

(54) **ELEKTRONISCHES TÜRSCHLOSS MIT HAPTISCHEM FEEDBACK**
ELECTRONIC DOOR LOCK WITH HAPTIC FEEDBACK
VERROU DE PORTE ELECTRONIQUE A REPONSE HAPTIQUE

(30) Priorität: 23.06.2014 DE 102014211921
(43) Veröffentlichungstag der Anmeldung: 30.12.2015
(73) Patentinhaber: BKS GmbH, 42549 Velbert (DE)
(72) Erfinder: Lelie, Christoph, 45136 Essen (DE)
(74) Vertreter: DREISS Patentanwälte PartG mbB

(56) Entgegenhaltungen:
- EP-A1- 1 510 637
- FR-A1- 2 922 035
- US-A1- 2014 002 239
- US-B1- 6 976 215

## Beschreibung

Die vorliegende Erfindung betrifft ein elektronisches Schloss, nämlich Türschloss, mit einer Handhabe zur Betätigung des Schlosses.

Elektronische Schlösser sind aus dem Stand der Technik bekannt. Derartige Schlösser dienen zum Verriegeln eines Zugangs, wie beispielsweise einer Tür, und können auf ein elektronisches Signal hin schlüssellos geöffnet werden. Das elektronische Signal wird beispielsweise infolge einer korrekten Eingabe eines Zahlencodes an einem Tastenfeld, eines empfangenen Signals eines Transponders oder durch Übereinstimmung eines gescannten mit einem hinterlegten Fingerabdruck eines Fingerabdruckscanners gegeben.

Bei elektronischen Schlössern besteht auf Grund fehlender manueller Interaktionsmöglichkeit wie bei einem herkömmlichen Schloss durch einen Schlüssel die Notwendigkeit, einem Benutzer des Schlosses einen aktuellen Betriebszustand oder einen aktuellen Fehlerzustand zu signalisieren. Hierzu werden entsprechende Signale regelmäßig auf optischem oder auf akustischem Wege an einen Benutzer übermittelt. Allerdings ist dabei problematisch, dass derartige Signale infolge von Umwelteinflüssen wie Sonnenlicht oder Lärm oftmals nur fehlerhaft oder unter Umständen sogar überhaupt nicht erkennbar sind. In jedem Falle ist die Erkennbarkeit der Signale nicht in hinreichendem Maße gewährleistet.

EP 1 510 637 A1 zeigt eine Betätigungseinrichtung für ein Kraftfahrzeug-Schließsystem mit Merkmalen des Oberbegriffs des Anspruchs 1 sowie mit Merkmalen des Oberbegriffs des nebengeordneten Anspruchs.

Der vorliegenden Erfindung liegt daher die Aufgabe zu Grunde, ein elektronisches Schloss der eingangs genannten Art derart auszugestalten und weiterzubilden, dass unabhängig von vorherrschenden Umgebungseinflüssen eine zuverlässige Signalisierung von Betriebs- und/oder Fehlerzuständen ermöglicht ist.

Die vorliegende Erfindung löst die voranstehende Aufgabe durch ein elektronisches Schloss, nämlich Türschloss, mit einer Handhabe zur Betätigung des Türschlosses, einem Vibrationselement zum Erzeugen von Schwingungen und einem Treiberelement zum Antrieb des Vibrationselements, wobei das Vibrationselement durch das Treiberelement derart in Schwingung versetzbar ist, dass durch verschiedene Vibrationsmuster an der Handhabe zur Signalisierung von unterschiedlichen Betriebszuständen und/oder Fehlerzuständen des elektronischen Schlosses unterschiedliche haptische Signale ausgebbar sind.

In erfindungsgemäßer Weise ist erkannt worden, dass eine zuverlässige Signalisierung von Betriebszuständen und/oder Fehlerzuständen erfolgen kann, wenn die hierzu erforderlichen Signale auf haptischem Wege übermittelt werden. Somit sind zuverlässige Informationen über den Betrieb oder einen Fehlerzustand an einen Benutzer des elektronischen Schlosses übermittelbar, und zwar unabhängig von etwaigen Umwelteinflüssen. Dabei ist in besonders vorteilhafter Weise das Vibrationselement durch das Treiberelement derart in Schwingung versetzbar, dass durch verschiedene Vibrationsmuster unterschiedliche haptische Signale ausgebbar sind. Hierdurch ist eine besonders detaillierte Information des Benutzers realisiert, da eine Vielzahl etwaiger Zustandssituationen an den Benutzer weitergegeben werden kann. Von besonderem Vorteil ist außerdem, dass diese Informationen ausspähsicher, das heißt für Dritte nicht wahrnehmbar sind. Dritte können diese Informationen weder sehen noch hören. Somit ist das erfindungsgemäße Schloss insbesondere bei sicherheitsrelevanten Anwendungen von Vorteil. Im Ergebnis ist ein elektronisches Schloss angegeben, bei dem unabhängig von vorherrschenden Umgebungseinflüssen eine zuverlässige Signalisierung von Betriebs- und/oder Fehlerzuständen gewährleistet ist.

Im Konkreten können die Vibrationsmuster Frequenzmodulationen und/oder Amplitudenmodulationen aufweisen. Hiermit kann durch Veränderung eines oder zweier Parameter eine hinreichende Anzahl unterschiedlicher haptischer Signale erzeugt und damit unterschiedliche Betriebs- und/oder Fehlerzustände ausgegeben werden.

In vorteilhafter Weise ist über die Handhabe oder über ein der Handhabe zugeordnetes Betätigungselement eine Codeeingabe ermöglicht. In diesem Zusammenhang ist denkbar, dass sich auf diesem Wege das elektronische Schloss öffnen oder freigeben lässt. Im Konkreten kann eine Codeeingabe ausspähsicher erfolgen, und zwar durch Eingabe eines Codes in Abhängigkeit von den an der Handhabe ausgegebenen unterschiedlichen haptischen Signalen. Sofern es sich bei der Handhabe um einen Knauf handelt, ist zur Codeeingabe ein Verdrehen des Knaufes denkbar.

Im Konkreten kann das Vibrationselement als Piezoaktor, elektrondynamischer Geber, insbesondere Hubmagnet, oder Vibrationsmotor, insbesondere mit einem Unwuchtgewicht, ausgebildet sein. Hiermit lässt sich je nach Bauart des elektronischen Schlosses und/oder Ausführung der Handhabe ein geeignetes Vibrationselement realisieren. Maßgeblich dabei ist, dass durch das Vibrationselement eine hinreichende Anregung der Handhabe erfolgen kann.

Das Treiberelement kann im Wege einer bevorzugten Ausgestaltung als Treiberbaustein, insbesondere als Treiberbaustein des Modells DRV2667, ausgebildet sein. Durch ein solches Treiberelement ist ein Antrieb des Vibrationselements und/oder dessen Regelung ermöglicht. Außerdem weisen derartige Treiberelement oder Treiberbausteine eine kompakte Bauform auf, so dass deren Anordnung oder Einbau an oder in der Handhabe begünstigt ist.

Im Konkreten kann die Handhabe als Knauf, Türdrücker oder Push-Bar ausgebildet sein. Somit kann für unterschiedliche Einsatzzwecke eine geeignete Handhabe bereitgestellt werden. Unabhängig von der Bauart der Handhabe kann diese aus Metall oder Kunststoff ausgebildet sein. Eine Handhabe aus Metall hat den Vorteil, dass diese langlebig und stabil, insbesondere bei entsprechend robuster Ausgestaltung resistent gegen Vandalismus, ist. Eine Handhabe aus Kunststoff kann die Komponenten des elektronischen Schlosses elektrisch und/oder mechanisch isolieren.

Weiter erfindungsgemäß wirkt mit der Handhabe ein Schließelement, nämlich ein Schließzylinder zusammen, wobei das Schließelement mit der Handhabe gekoppelt ist. Somit ist eine unmittelbare Betätigung des einen Zugang öffnenden Schließelements ermöglicht.

Im Hinblick auf Bereitstellung von Energie ist es von Vorteil, wenn die Energieversorgung des Vibrationselements und/oder des Treiberelements leitungsgebunden, insbesondere mit Niederspannung, oder durch einen, vorzugsweise an oder in der Handhabe angeordneten, Energiespeicher erfolgt. Eine leitungsgebundene Energieversorgung ist bei Gebäuden mit hohem Personendurchsatz von Vorteil, wie beispielsweise im Falle von Behörden oder Firmengebäuden. Durch die leitungsgebundene Energieversorgung lässt sich somit auch bei hohem Personenverkehr ein zuverlässiger Betrieb des elektronischen Schlosses realisieren. Aus Sicherheitsgründen ist der Betrieb mit Niederspannung von Vorteil. Eine Energieversorgung mittels eines Energiespeichers hat den Vorteil, dass ein netzunabhängiger Betrieb ermöglicht ist. Ein für eine leitungsgebundene Stromversorgung erforderlicher Verkabelungsaufwand entfällt. Bei dem Energiespeicher kann es sich um einen wiederaufladbaren Akkumulator oder um eine nicht wiederaufladbare Batterie oder Primärzelle handeln.

Gemäß einer besonders bevorzugten Ausführungsform kann das Vibrationselement an einem Ende mit einer das Treiberelement aufnehmenden Leiterplatine gekoppelt sein und am anderen Ende mit der Handhabe zusammenwirken. Die Leiterplatine kann an oder in der Handhabe angeordnet sein. Hiermit ist eine einfache und platzsparende Bauweise realisiert. Maßgeblich ist, dass durch das Vibrationselement eine hinreichende Anregung der Handhabe ermöglicht ist. In besonders vorteilhafter Weise kann hierzu ein Piezobiegeelement oder ein Piezo-Biegewandler eingesetzt werden. An einem Ende ist der Piezo-Biegewandler auf der Leiterplatte fixiert und elektrisch kontaktiert. Das andere Ende wirkt mit der Handhabe zusammen.

Im Hinblick auf die Zusammenwirkung von Vibrationselement und Handhabe ist denkbar, dass das Vibrationselement am anderen Ende ein freies Ende aufweist oder dass das Vibrationselement am anderen Ende mit der Handhabe gekoppelt ist, vorzugsweise formschlüssig an der Handhabe befestigt ist. Bei einem freien Ende des Vibrationselements wirkt dieses im angeregten, das heißt schwingenden Zustand, wie eine Art Stimmgabel, wobei die Schwingungen großenteils über die Leiterplatine übertragen werden, die mittelbar oder unmittelbar an der Handhabe befestigt sein kann. Dies ermöglicht eine einfache Montage des Vibrationselements in der Handhabe, da an der Handhabe keine besonderen Fertigungsschritte notwendig sind. Des Weiteren ist auf diese Weise ein Zusammenwirken zwischen Vibrationselement und Handhabe auch dann ermöglicht, wenn zur Betätigung der Handhabe eine große rotatorische oder translatorische Bewegung erforderlich ist. Ist das Vibrationselement hingegen am anderen Ende mit der Handhabe gekoppelt, ist eine starke und unmittelbare Anregung der Handhabe durch das Vibrationselement ermöglicht.

Des Weiteren löst die vorliegende Erfindung die voranstehende Aufgabe auch durch ein Verfahren zur Ausgabe unterschiedlicher haptischer Signale an einem elektronischen Schloss, nämlich einem Türschloss, vorzugsweise einem Schloss nach einem der voranstehenden Ansprüche, mit einer Handhabe zur Betätigung des Türschlosses, einem Vibrationselement zum Erzeugen von Schwingungen und einem Treiberelement zum Antrieb des Vibrationselements, wobei das Vibrationselement durch das Treiberelement derart in Schwingung versetzt wird, dass durch verschiedene Vibrationsmuster an der Handhabe zur Signalisierung von unterschiedlichen Betriebszuständen und/oder Fehlerzuständen des elektronischen Schlosses unterschiedliche haptische Signale ausgegeben werden gemäß dem nebengeordneten Patentanspruch.

Hinsichtlich vorteilhafter Ausgestaltungen des erfindungsgemäßen Verfahrens sei zur Vermeidung von Wiederholungen auf die Ausführungen zur bevorzugten Ausgestaltung des erfindungsgemäßen Schlosses verwiesen, wobei sich die dortigen Merkmale auch in verfahrensmäßiger Hinsicht lesen lassen.

Weitere Merkmale und Vorteile der Erfindung sind Gegenstand der nachfolgenden Beschreibung und der zeichnerischen Darstellung bevorzugter Ausführungsbeispiele. In der Zeichnung zeigen:
- Fig. 1: eine schematische Darstellung in Form eines Schaltbildes einer Ausführungsform eines elektronischen Schlosses;
- Fig. 2: eine schematische, teilweise geschnittene Draufsicht einer Handhabe einer ersten Ausführungsform eines elektronischen Schlosses;
- Fig. 3: eine teilweise geschnittene Vorderansicht der Handhabe eines elektronischen Schlosses entlang einer in Fig. 2 mit A-A bezeichneten Schnittebene;
- Fig. 4: eine schematische, teilweise geschnittene Draufsicht einer Handhabe einer weiteren Ausführungsform eines elektronischen Schlosses; und
- Fig. 5: eine teilweise geschnittene Vorderansicht der Handhabe eines elektronischen Schlosses entlang einer in Fig. 4 mit A-A bezeichneten Schnittebene.

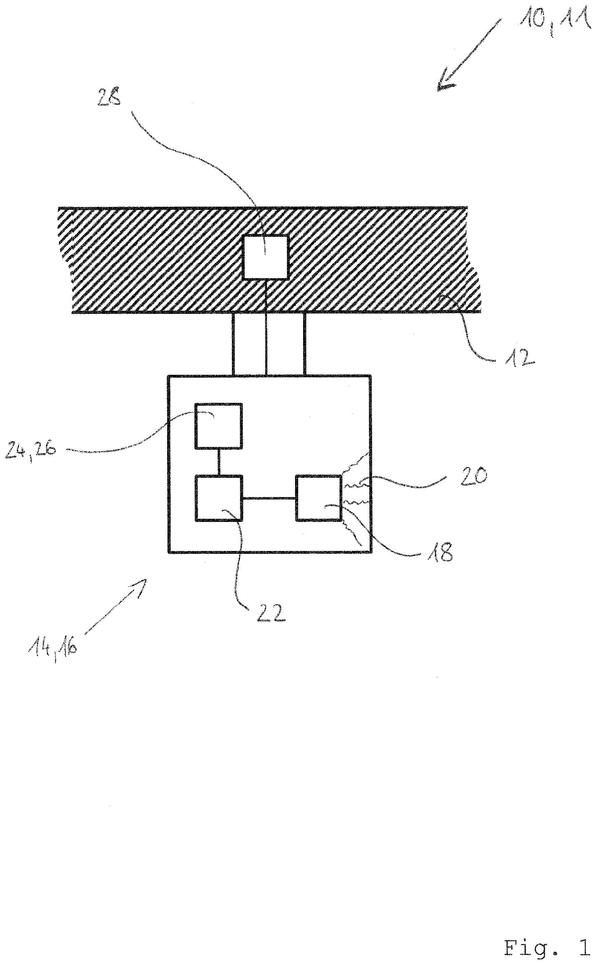

Eine Ausführungsform eines elektronischen Schlosses ist als Schaltbild in Figur 1 schematisch dargestellt und dort mit dem Bezugszeichen 10 gekennzeichnet. Das elektronische Schloss 10 ist als Türschloss 11 ausgebildet und einer Türe 12 zugeordnet. Zur Betätigung des Schlosses 10 ist eine Handhabe 14 vorgesehen.

Die Handhabe 14 ist im vorliegenden Ausführungsbeispiel als drehbarer Knauf 16 ausgebildet. Der Einfachheit halber wird im Folgenden der Begriff Knauf verwendet, der sich jedoch ebenso ganz allgemein auf eine Handhabe bezieht und demnach auch verschiedene Handhaben miteinschließt.

Im Knauf 16 ist ein Vibrationselement 18 zum Erzeugen von Schwingungen 20 angeordnet. Das Vibrationselement 18 ist mit einem Treiberelement 22 gekoppelt, welches zum Antrieb und/oder zur Steuerung des Vibrationselements 18 dient. Das Vibrationselement 18 erzeugt Schwingungen 20 und wirkt derart mit dem Knauf 16 zusammen, dass die vom Vibrationselement 18 ausgesandten Schwingungen bei Berühren des Knaufs 16 durch einen Benutzer spürbar sind.

Zur Energieversorgung des Vibrationselements 18 und des Treiberelements 22 ist ein Energiespeicher 24 vorgesehen. Dieser ist im vorliegenden Ausführungsbeispiel als Batterie 26 ausgebildet.

Mit dem Knauf 16 wirkt ein Schließelement 28 zusammen, welches mit dem Knauf 16 gekoppelt ist. Bei Betätigung des Knaufs 16 öffnet das Schließelement 28 die Türe 12 und gibt somit einen Zugang frei.

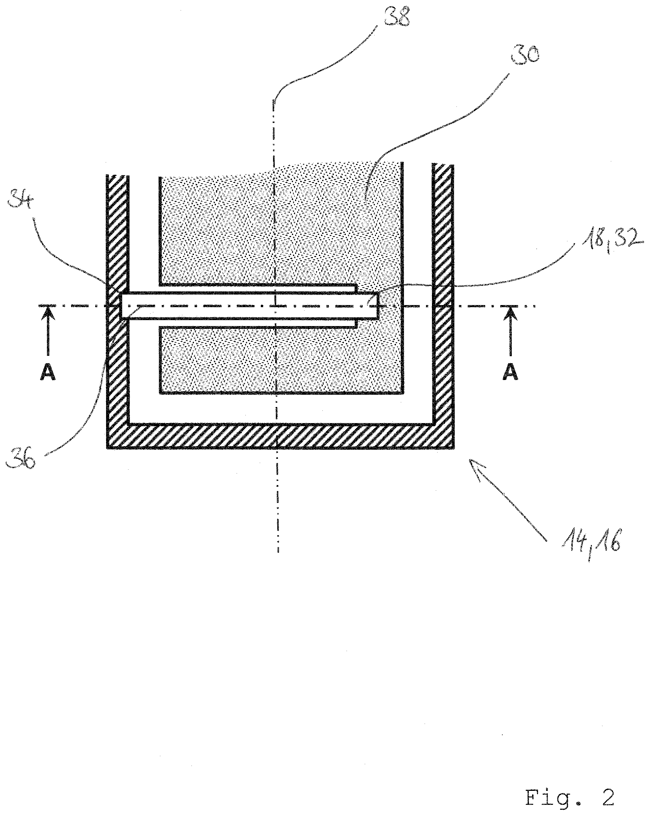

Figur 2 zeigt eine schematische, teilweise geschnittene Draufsicht einer Handhabe 14 einer ersten Ausführungsform eines elektrischen Schlosses 10. Die Handhabe 14 ist als Knauf 16 ausgebildet.

Im Knauf 16 ist eine Leiterplatine 30 angeordnet, die mit einem Vibrationselement 18 gekoppelt ist. Die Leiterplatine 30 ist relativ zum Knauf 16 befestigt, beispielsweise an einer Türe 12. Es ist denkbar, dass die Leiterplatine 30 neben dem Vibrationselement 18 mit weiteren Komponenten, wie beispielsweise einem Treiberelement 22 oder einem Energiespeicher 24, gekoppelt ist oder diese auf der Leiterplatine 30 aufnimmt.

Das Vibrationselement 18 ist als Piezo-Biegeelement 32 ausgebildet. Das Piezo-Biegeelement 32 ist an einem Ende mit der Leiterplatine 30 gekoppelt. Am anderen Ende ist das Piezo-Biegeelement mit dem Knauf 16 verbunden. Im Konkreten ist das Piezo-Biegeelement 32 formschlüssig mit dem Knauf 16 gekoppelt, und zwar mittels einer Nut 34.

Bei einer Anregung des Piezo-Biegeelements 32 schwingt das Piezo-Biegeelement 32 orthogonal zu einer durch das Piezo-Biegeelement 32 gebildeten Ebene 36. Dies führt zu einer Kipp- und/oder Torsionsbewegung des Knaufs 16, und zwar um dessen Längsachse 38. Durch die unmittelbare Ankopplung des Piezo-Biegeelements 32 am Knauf 16 wird dieser in mechanische Schwingung versetzt, was bei Berührung durch einen Benutzer deutlich spürbar ist.

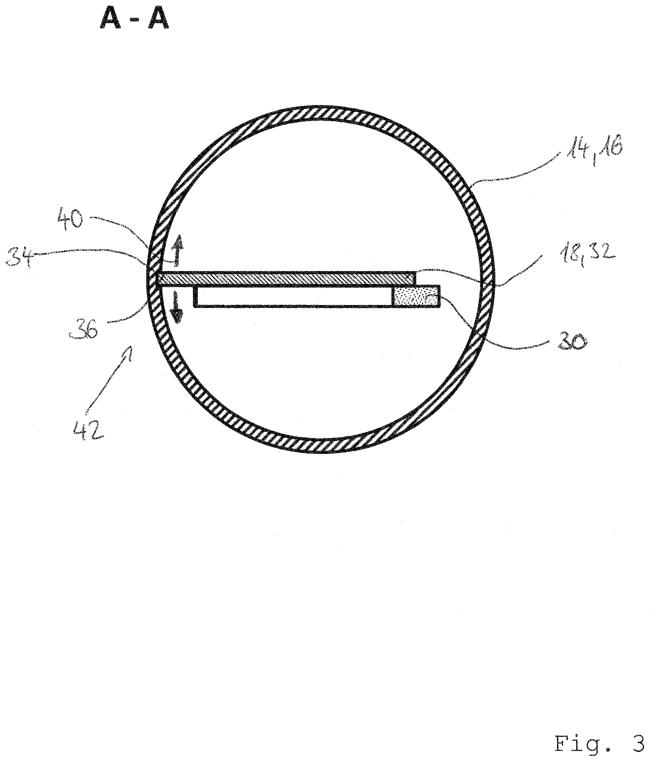

Figur 3 zeigt den Knauf 16 in einer teilweise geschnittenen Vorderansicht entlang einer in Figur 2 mit A-A bezeichneten Schnittebene. Die Auslenkung oder Schwingung 40 des Piezo-Biegeelements 32 ist orthogonal zur durch das Piezo-Biegeelement 32 gebildeten Ebene 36 orientiert. Das Piezo-Biegeelement ist an seinem Ende 42 über eine Nut 34 mit der Handhabe 14, nämlich dem Knauf 16, gekoppelt.

Hinsichtlich der Beschreibung der weiteren Komponenten sei zur Vermeidung von Wiederholungen auf die voranstehende Beschreibung zu Figur 2 verwiesen, wobei die dortigen Elemente mit identischen Bezugszeichen versehen sind.

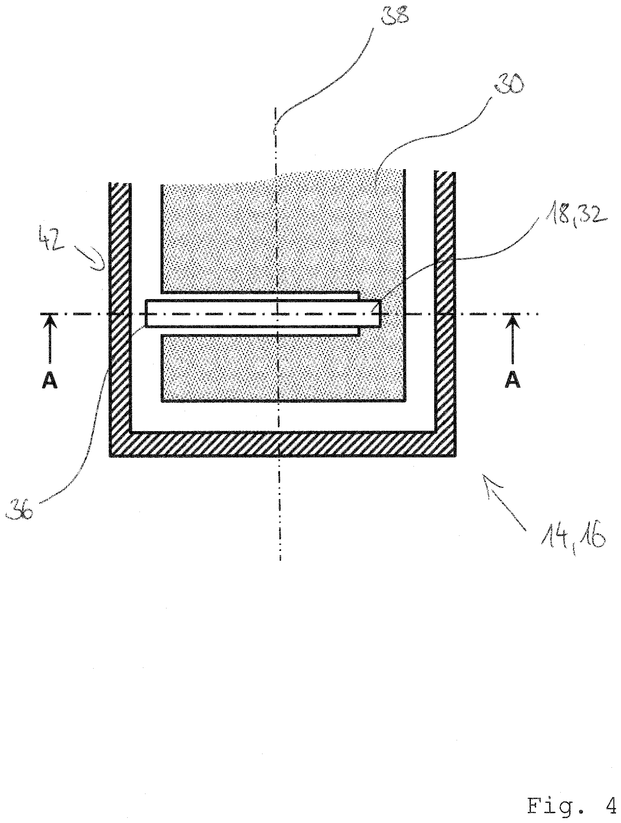

Figur 4 zeigt in einer Draufsicht eine Handhabe einer weiteren Ausführungsform eines elektronischen Schlosses 10.

Diese Ausführungsform entspricht weitgehend der voranstehend beschriebenen ersten Ausführungsform, so dass hier zur Vermeidung von Wiederholungen zunächst auf die Beschreibung der voranstehenden Ausführungsform verwiesen wird, wobei dort gleiche oder funktional gleiche Elemente mit identischen Bezugszeichen versehen sind.

Im Unterschied zur voranstehenden Ausführungsform ist das als Vibrationselement 18 dienende Piezo-Biegeelement 32 an einem Ende mit der Leiterplatine 30 gekoppelt, weist am anderen, von der Leiterplatine 30 abgewandten Ende 42 jedoch ein freies Ende auf. Das Piezo-Biegeelement 32 schwingt bei Anregung ähnlich einer Stimmgabel. Die Schwingungen übertragen sich ausgehend vom Piezo-Biegeelement 32 über die Leiterplatte 30 auf den Knauf 16 und sind dort bei Berührung durch einen Benutzer spürbar.

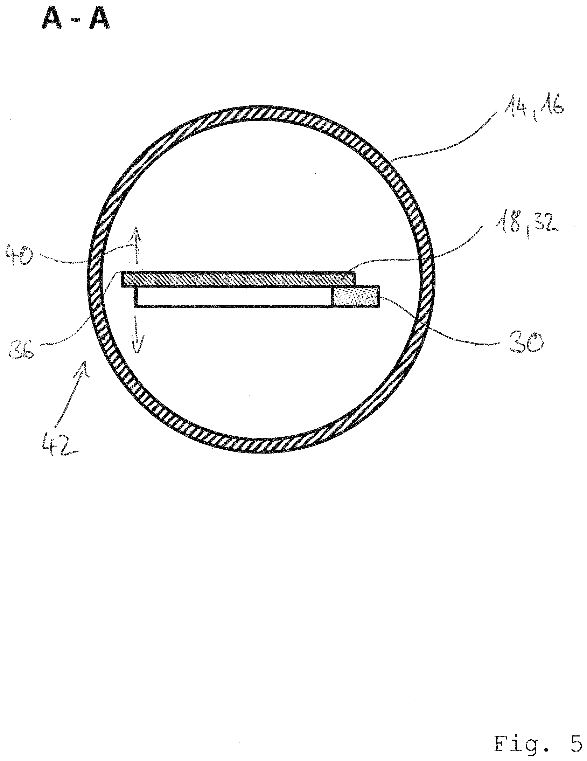

Figur 5 zeigt eine teilweise geschnittene Vorderansicht der Handhabe eines elektronischen Schlosses entlang einer in Figur 4 mit A-A bezeichneten Schnittebene.

Die Auslenkungen oder Schwingungen 40 sind orthogonal zu einer durch das Piezo-Biegeelement 32 gebildeten Ebene 36 orientiert. Ausgehend vom Piezo-Biegeelement 32 übertragen sich die Schwingungen über die Leiterplatine 30 auf den Knauf 16.

Zur Vermeidung von Wiederholungen wird hinsichtlich der Beschreibung der weiteren Elemente auf die voranstehende Beschreibung verwiesen, wobei gleiche oder funktional gleiche Elemente mit identischen Bezugszeichen versehen sind.

## Patentansprüche

1. Elektronisches Schloss (10), nämlich Türschloss (11), mit einer Handhabe (14, 16) zur Betätigung des Türschlosses (10,11), einem Vibrationselement (18, 32) zum Erzeugen von Schwingungen (20, 40) und einem Treiberelement (22) zum Antrieb des Vibrationselements (18, 32), **dadurch gekennzeichnet, dass** das Vibrationselement (18) durch das Treiberelement (22) derart in Schwingung versetzbar ist, dass durch verschiedene Vibrationsmuster an der Handhabe (14, 16) zur Signalisierung von unterschiedlichen Betriebszuständen und/oder Fehlerzuständen des elektronischen Schlosses (10) unterschiedliche haptische Signale ausgebbar sind, dass mit der Handhabe (14, 16) ein Schließelement (28) in Form eines Schließzylinders zusammenwirkt und dass das Schließelement (28) mit der Handhabe (14, 16) gekoppelt ist.

2. Schloss (10) nach Anspruch 1, **dadurch gekennzeichnet, dass** die Vibrationsmuster Frequenzmodulationen und/oder Amplitudenmodulationen aufweisen.

3. Schloss (10) nach Anspruch 1 oder 2, **dadurch gekennzeichnet, dass** das Vibrationselement (18, 32) als Piezoaktor (32), elektrodynamischer Geber, insbesondere Hubmagnet, oder Vibrationsmotor, insbesondere mit einem Unwuchtgewicht, ausgebildet ist.

4. Schloss (10) nach einem der voranstehenden Ansprüche, **dadurch gekennzeichnet, dass** das Treiberelement (22) als Treiberbaustein ausgebildet ist.

5. Schloss (10) nach einem der voranstehenden Ansprüche, **dadurch gekennzeichnet, dass** die Handhabe (14) als Knauf (16), Türdrücker oder Push-Bar ausgebildet ist und/oder dass die Handhabe (14, 16) aus Metall oder Kunststoff ausgebildet ist.

6. Schloss (10) nach einem der voranstehenden Ansprüche, **dadurch gekennzeichnet, dass** die Energieversorgung des Vibrationselements und/oder des Treiberelements leitungsgebunden, insbesondere mit Niederspannung, oder durch einen, vorzugsweise an oder in der Handhabe (14, 16) angeordneten, Energiespeicher (24, 26) erfolgt.

7. Schloss (10) nach einem der voranstehenden Ansprüche, **dadurch gekennzeichnet, dass** das Vibrationselement (18, 32) an einem Ende mit einer das Treiberelement (22) aufnehmenden Leiterplatine (30) gekoppelt ist und am anderen Ende (42) mit der Handhabe (14 ,16) zusammenwirkt.

8. Schloss nach Anspruch 7, **dadurch gekennzeichnet, dass** das Vibrationselement (18, 32) am anderen Ende (42) ein freies Ende (42) aufweist oder dass das Vibrationselement (18, 32) am anderen Ende (42) mit der Handhabe (14, 16) gekoppelt ist, vorzugsweise formschlüssig an der Handhabe (14, 16) befestigt ist.

9. Verfahren zur Ausgabe unterschiedlicher haptischer Signale an einem elektronischen Schloss (10), nämlich einem Türschloss (11), vorzugsweise einem Schloss (10) nach einem der voranstehenden Ansprüche, mit einer Handhabe (14, 16) zur Betätigung des Türschlosses (10,11), einem Vibrationselement (18, 32) zum Erzeugen von Schwingungen und einem Treiberelement (22) zum Antrieb des Vibrationselements (18, 32), **dadurch gekennzeichnet, dass** das Vibrationselement (18, 32) durch das Treiberelement (22) derart in Schwingung versetzt wird, dass durch verschiedene Vibrationsmuster an der Handhabe (14, 16) zur Signalisierung von unterschiedlichen Betriebszuständen und/oder Fehlerzuständen des elektrischen Schlosses (10) unterschiedliche haptische Signale ausgegeben werden, dass mit der Handhabe (14, 16) ein Schließelement (28) in Form eines Schließzylinders zusammenwirkt und dass das Schließelement (28) mit der Handhabe (14, 16) gekoppelt ist.

## Claims

1. An electronic lock (10), namely a door lock (11), comprising a handle (14, 16) for actuating said door lock (10, 11), a vibration element (18, 32) for generating vibrations (20, 40), and a driver element (22) for driving said vibration element (18, 32), **characterized in that** said vibration element (18) is vibrated by said driver element (22) in such a way that different haptic signals can be output by different vibration patterns at said handle (14, 16) for signalling different operating states and/or error states of said electronic lock (10), that a closing element (28) in the form of a lock cylinder cooperates with said handle (14, 16), and that said closing element (28) is coupled to said handle (14, 16).

2. The lock (10) according to claim 1, **characterized in that** the vibration patterns include frequency modulations and/or amplitude modulations.

3. The lock (10) according to claim 1 or 2, **characterized in that** said vibration element (18, 32) is configured as a piezoelectric actuator (32), an electrodynamic transducer, in particular a lifting magnet, or a vibration motor, in particular with an unbalance weight.

4. The lock (10) according to one of the preceding claims, **characterized in that** said driver element (22) is configured as a driver module.

5. The lock (10) according to one of the preceding claims, **characterized in that** said handle (14) is configured as a knob (16), door handle, or push bar, and/or that said handle (14, 16) is made of metal or plastic.

6. The lock (10) according to one of the preceding claims, **characterized in that** the power supply of the vibration element and/or the driver element is provided by wire, in particular at low voltage, or by an energy storage (24, 26), preferably disposed at or in said handle (14, 16).

7. The lock (10) according to one of the preceding claims, **characterized in that** said vibration element (18, 32) is coupled to a circuit board (30) receiving said driver element (22) at one end and interacts with said handle (14, 16) at the other end (42).

8. The lock according to claim 7, **characterized in that** said vibration element (18, 32) has a free end (42) at the other end (42) or that said vibration element (18, 32) is coupled to said handle (14, 16), preferably attached to said handle (14, 16) in a form-locking manner, at the other end (42).

9. A method for outputting different haptic signals at an electronic lock (10), namely a door lock (11), preferably a lock (10) according to one of the preceding claims, comprising a handle (14, 16) for actuating said door lock (10, 11), a vibration element (18, 32) for generating vibrations, and a driver element (22) for driving said vibration element (18, 32), **characterized in that** said vibration element (18, 32) is vibrated by said driver element (22) in such a way that different haptic signals can be output by different vibration patterns at said handle (14, 16) for signalling different operating states and/or error states of said electronic lock (10), that a closing element (28) in the form of a lock cylinder cooperates with said handle (14, 16), and that said closing element (28) is coupled to said handle (14, 16).

## Revendications

1. Serrure électronique (10), à savoir serrure de porte (11), avec une poignée (14, 16) destinée à actionner la serrure de porte (10, 11), un élément vibratoire (18, 32) destiné à générer des vibrations (20, 40) et un élément d'entraînement (22) destiné à entraîner l'élément vibratoire (18, 32), **caractérisée en ce que** l'élément vibratoire (18) peut être mis en vibration par l'élément d'entraînement (22), **en ce que** grâce à divers modèles vibratoires, des signaux haptiques différents peuvent être émis au niveau de la poignée (14, 16) pour signaler des états de fonctionnement et/ou des états d'erreur différents de la serrure électronique (10), **en ce qu'**un élément de fermeture (28) se présentant sous la forme d'un cylindre de verrouillage coopère avec la poignée (14, 16) et **en ce que** l'élément de fermeture (28) est couplé à la poignée (14, 16).

2. Serrure (10) selon la revendication 1, **caractérisée en ce que** les modèles vibratoires présentent des modulations de fréquence et/ou des modulations d'amplitude.

3. Serrure (10) selon la revendication 1 ou 2, **caractérisée en ce que** l'élément vibratoire (18, 32) est réalisé sous forme d'actionneur piézoélectrique (32), de transmetteur électrodynamique, en particulier d'électroaimant, ou de moteur vibrant, en particulier avec un balourd.

4. Serrure (10) selon l'une quelconque des revendications précédentes, **caractérisée en ce que** l'élément d'entraînement (22) est réalisé sous forme de module d'entraînement.

5. Serrure (10) selon l'une quelconque des revendications précédentes, **caractérisée en ce que** la poignée (14) est réalisée sous forme de bouton (16), de poignée de porte ou de barre à pousser et/ou **en ce que** la poignée (14, 16) est réalisée en métal ou en matière plastique.

6. Serrure (10) selon l'une quelconque des revendications précédentes, **caractérisée en ce que** l'alimentation de l'élément vibratoire et/ou de l'élément d'entraînement se fait par ligne électrique, en particulier à basse tension, ou grâce à un accumulateur d'énergie (24, 26), de manière préférée agencé sur ou dans la poignée (14, 16) .

7. Serrure (10) selon l'une quelconque des revendications précédentes, **caractérisée en ce que** l'élément vibratoire (18, 32) est couplé au niveau d'une extrémité à une carte de circuit imprimé (30) accueillant l'élément d'entraînement (22), et coopère avec la poignée (14, 16) au niveau de l'autre extrémité (42).

8. Serrure selon la revendication 7, **caractérisée en ce que** l'élément vibratoire (18, 32) présente une extrémité libre (42) au niveau de l'autre extrémité (42) ou **en ce que** l'élément vibratoire (18, 32) est couplé à la poignée (14, 16) au niveau de l'autre extrémité (42), et de manière préférée est fixé avec complémentarité de forme à la poignée (14, 16).

9. Procédé d'émission de différents signaux haptiques au niveau d'une serrure électronique (10), à savoir une serrure de porte (11), de manière préférée une serrure (10) selon l'une quelconque des revendications précédentes, avec une poignée (14, 16) destinée à actionner la serrure de porte (10, 11), un élément vibratoire (18, 32) destiné à générer des vibrations (20, 40) et un élément d'entrainement (22) destiné à entraîner l'élément vibratoire (18, 32), **caractérisé en ce que** l'élément vibratoire (18) est mis en vibration par l'élément d'entrainement (22) de telle manière que, grâce à divers modèles vibratoires, des signaux haptiques différents sont émis au niveau de la poignée (14, 16) pour signaler des états de fonctionnement et/ou des états d'erreur différents de la serrure électronique (10), **en ce qu'**un élément de fermeture (28) se présentant sous la forme d'un cylindre de verrouillage coopère avec la poignée (14, 16) et **en ce que** l'élément de fermeture (28) est couplé à la poignée (14, 16).
